# EUROPEAN PATENT APPLICATION

(11) **EP 0 724 238 A1**
(43) Date of publication of application: **31.07.1996**
(21) Application number: 95201458.7
(22) Date of filing: 02.06.1995
(51) Int. Cl.: G07F 7/10, G07F 19/00

(54) **Card apparatus and cashless transaction system**

(30) Priority: 24.01.1995 EP 95200163
(71) Applicant: Europay International S.A., B-1410 Waterloo (BE)
(72) Inventor: Phillimore, Richard, B-1652 Alsemberg (BE)
(74) Representative: Land, Addick Adrianus Gosling

(57) **Abstract**

The present invention provides a card apparatus for executing financial transactions, comprising:
- processor means for executing authorization routines and certain financial transactions, at least including prepaid transactions off-line, and loading transactions on line directly or indirectly with an issuer computer of an issuer company which issues said card apparatus; and
- memory means for storing data into said card apparatus, at least including a first purse memory part for storing a purse value of a fixed amount as agreed upon between the issuer computer and the user of said card apparatus, and a second authorization memory part for storing an encoded authorization number for authorizing a load onto said card when the user has entered his/her personal authorization number.

## Description

Applicant provides a number of Pay Now and Pay Later products to cardholders and merchants, such as bank (debit) cards and credit cards, both for domestic and cross border financial transactions in Europe and other parts of the world. The present invention relates to a Pay Before product or so called electronic purse so that the user of such electronic purse always has the exact change in the right place at the right time, reducing the hassle of cash at home and abroad.

WO-A-91/1669 discloses a value transfer system allowing value to be transferred between electronic purses and comprising one or more computers which control the loading of purses with value and a redemption of value from purses. In this known system the redemption of value takes place off-line, for instance at vending machines when buying a product of relatively low value, such as a candy bar or the like. Within this known system, purchase transaction data are transmitted as encoded blocks, so that it is difficult or even impossible to retrieve details of each purchase transaction. This will make detection of fraudulent use of cards also difficult or impossible.

As in other proposed systems, the loading of value onto a financial card according to the above value transfer system is executed by entering a personal identification number (PIN) at an automatic teller machine (ATM) which has an on-line connection with a bank computer. Thereafter the user of the financial card is requested to indicate the amount which is to be debited from his/her account whereafter the transaction is completed by loading such purse amount onto the memory part of the financial card.

Such interactive procedure, especially requesting the user to choose the purse amount to be loaded onto the card, is time consuming and is therefor not suitable for use in a shop or supermarket, where a queue of people may be waiting to complete a purchase.

It is an object of the present invention to provide a card apparatus where loading of value onto said card is executed as quickly as possible and/or in a safe way, when necessary and/or whereby each purchase transaction can be traced, viz. it is accountable so that a report of transaction is obtainable on paper.

The present invention provides a card apparatus for executing financial transactions, comprising:
- processor means for executing authorization routines and certain financial transactions, at least including prepaid transactions off-line, and loading transactions on line directly or indirectly with an issuer computer of an issuer company which issues said card apparatus; and
- memory means for storing data into said card apparatus, at least including a first purse memory part for storing a purse value of a certain amount as agreed upon between the issuer company and the cardholder of said card apparatus, or as permitted by the issuer company, and a second verification memory part for storing encoded information for cardholder verification for approving and request to load value onto such card when the user has entered his/her personal identification information.

The card apparatus according to the present invention can initiate a request to load value of a predetermined amount, when necessary and when the card apparatus is inserted in a terminal which is capable of going on line with a bank computer. The user or cardholder will in most instances not be requested to chose the amount to be loaded.

Further the card apparatus according to the present invention provides for a tailored product or service to the user, as the certain amount as agreed upon and to be loaded, can be different for each user. It may also be possible with a financial card according to the present invention to use ATM's or other terminals for loading value onto such card apparatus, with the possibility for the cardholder to choose the amount to be loaded. In such cases a ceiling for such value can be set by the issuer company.

Further features of the card apparatus according to the present invention as defined in the subclaims also relate to more efficient use of such financial card, especially in connection with transactions in different currencies which are especially necessary in the context of the increasing number of European countries in which financial cards are used.

Further the present invention provides a cashless transaction system, comprising:
- a number of card apparatus for off-line execution of financial cashless transactions;
- one or more terminal apparatuses provided with receiving means for receiving a card apparatus and with a keyboard for off-line executing financial cashless transactions;
- one or more acquirers operatively in connection with one or more terminal apparatuses for acquiring the transaction values obtained by said terminal apparatus;
- one or more clearers for clearing financial transactions, including transborder transactions and operatively in connection with said acquirer; and
- one or more issuers which issued said financial card on by which issuer a and by which issuer a float account is held, in which float account the prepaid amounts are recorded.

Further features, advantages and details of the present invention are clarified in the following description with reference to the annexed drawings, in which show:
fig. 1 a diagram of a preferred embodiment of a financial card apparatus according to the present invention;
fig. 2 a scheme for the loading of the preferred embodiment of fig. 1; and
fig. 3 a diagram of a preferred embodiment of a cash transaction system of the present system, preferably including one or more preferred embodiments of the card apparatus according to the present invention.

A preferred embodiment of a card apparatus according to the present invention, including a prepayment function, will provide value for the card holder to be used for purchases, after the card holder has given permission for such value to the issuer company. Purchase transactions will usually take place off-line and will be controlled by the card issuer company through certain parameters to be set up in an integrated circuit in the card. During a purchase transaction (and load transaction) the terminal will perform the following security checks:
- if the card is listed on any HOT CARD LIST contained in the terminal the transactions is stopped because if a card is on the hot card list it will mean that it is stolen or lost by the holder with which the issuer company had an agreement;
- the terminal will check if the card is authentic. If not, the transaction is stopped; and
- the terminal will check whether the card is expired or certain applications of the financial card are terminated or blocked by the issuer company. If this is the case, the transaction will follow a separate approval process and may or may not be completed.

Like a smart card, known as such, the card apparatus according to the present invention comprises processor means and memory means embedded in the card apparatus, in one or more integrated circuits. The risk parameters for detecting fraudulent card and fraudulent card use will be effected in a way equivalent to such smart cards. The card apparatus can either be provided with electrical contacts for contact with a vending machine, ATM or other terminal for loading value or redemption of value or with contactless transfer means, e.g. based on electromagnetically coupled interactions or other. The card apparatus functions can also be implemented in existing smart cards such as debit cards or credit cards provided with processor means and memory means.

According to the present invention, value is loaded onto the card apparatus during an on-line dialogue. The value is loaded into one of the purses on the card from the cardholders nominated account. All load transactions will be validated by the cardholder entering his PIN. The PIN will be validated by the card. Load transactions therefore will not be possible at terminals which do not have a PIN keypad or cannot go on-line. There are two ways in which a load can occur. It can be initiated by the cardholder or can be initiated by the card. The cardholder initiated load always occurs at the location where it is possible to go on-line with an issuer computer or intermediate computer. Such terminals will not be normal POS machines but may for example be combined with existing ATM's or may be specialized machines, e.g. telephones. In case of cardholder initiated loading, the holder of the card apparatus may also be invited to choose the amount to be loaded.

Whenever a card holder attempts a purchase transaction which takes the balance below a certain minimum agreed between the card holder and issuer company, the card will initiate a load sequence. This minimum may be established at the time of issuing the card, and can be zero, but can also be a certain value above zero. The card holder will be required to enter his/her PIN, whereby the loading sequence can only take place at a terminal that is capable of going on-line with a bank computer. As described above, certain security checks will have been performed before going on-line with a bank computer. The card may also force an on-line dialogue with the bank computer for other reasons, such as when the cardholder has made a number of wrong PIN tries off-line and the card can no longer approve of transaction without reference.

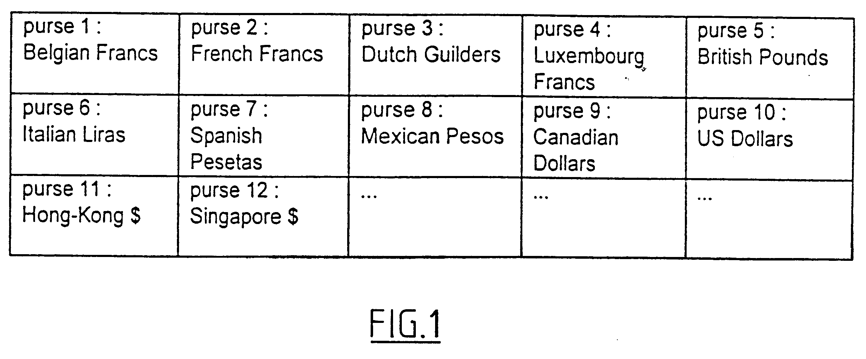

The card apparatus according to the present invention is preferably suited for a number of foreign currencies so that the card can be used in different countries. One purse on the card corresponds to one currency. Fig. 1 shows a conceptual structure for 12 purses, for instance Belgium franks, French franks, Dutch guilders, Luxembourg franks, British pounds, Italian lires, Spanish pesetas, Mexican pesos, Canadian dollars, US dollars, Hong Kong dollars, Singapore dollars.

Preferably different thresholds are defined for the card and/or for each purse:
- the load trigger value below or at which a loading is automatically initiated, every time the card is used at an on-line terminal. The load trigger value for each purse may be defined by the issuer company;
- the purchase completion guarantee limit: when the balance on the card is not sufficient to complete a purchase and the purchase transaction terminal is not capable of going on-line or the on-line dialogue has failed, a purchase completion guarantee is preferably made available to allow the card holder to still complete the purchase transaction. The purchase completion guarantee limit may be defined by the issuer company.

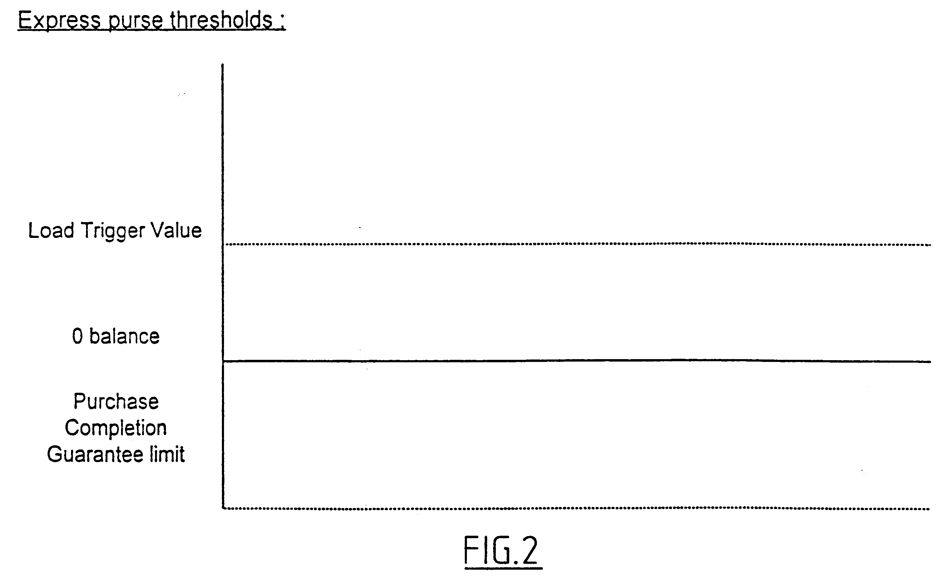

Fig. 2 shows the situation where the load trigger value is +100 BeF (Belgian Franks) and the purchase completion guarantee is -150 BeF.

### Example:

If the balance on the card is +300 BeF (Belgian Franks) and the purchase amount is 400 BeF, then the purchase can be completed as the amount lacking (100 BeF) is lower than the purchase completion guarantee of 150 BeF, even if the terminal is not capable of going on-line with a bank computer or when the on-line dialogue has failed.

The overdraft due to the purchase completion guarantee limit may be accounted with when a next load occurs. If during a subsequent time period, e.g. one months, no further load occurs, the overdraft will be debited to the card holder by the issuer company as if the transaction was made by a credit card. The card will then be credited by the same amount as soon as it will go on-line with a bank computer.

A card holder who had value recorded on his card, perhaps after returning from a trip abroad, may wish to get that value back without making a purchase transaction. Unloading will be allowed at any terminal that allows card holder initiated loading. The value can either be recredited to the customers account (the one from which the value was taken to effect the load), or added to another purse open on the card (usually the domestic currency).

When a domestic transaction is involved, but especially when a foreign exchange transaction is involved, such transaction is preferably managed by a clearing company, which will also facilitate the transfer of cross border information between the issuer company, acquirer company and local processing companies in a certain country. Information may be on-line authorizations, the clearing of groups of transactions or detailed transaction queries. The clearing company may also act as the local processing company if so requested by local banks, or it may simply make the card apparatus according to the present invention available to perform the same functionality as required by the local processing company under the control of local banks.

For load transactions, the rate of exchange between the cardholder's account currency and the currency loaded onto the purse will be determined by the card issuer who will also manage debiting of the cardholder account and the crediting of the issuers float account. For purchase transactions, the cardholder's purse in the transaction currency will be debited and no foreign exchange will be involved. For cross border transactions, the issuer may choose to settle with the net settlement system in a currency other that the transaction currency and any such foreign exchange rate will be managed by the clearing company, as will the clearin of the transaction between the acquirer and issuer.

Each purchase transaction will happen in the local currency of the merchant. After each transaction there is an exchange of value between the merchant and his acquirer, and between the acquirer and the issuer through a net settlement system, which is known per se e.g. for debit cards and credit cards such as eurocard.

Purse to purse and card to card transfer is allowed at any attended or unattended terminal that allows a cardholder initiated load. The cardholder has the choice between unloading the total balance of the purse or part of it. To unload the purse its balance must be positive, meaning that the unload transaction can not result in a negative balance in a purse.

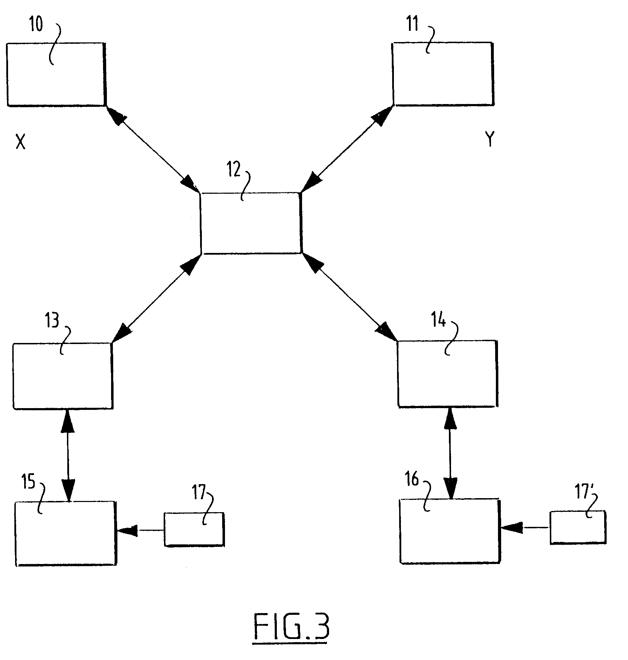

The clearance scheme for cross border transactions is schematically shown in fig. 3 in which a computer 10 of first issuer company in country X and a second computer 11 of a second issuer company in a country Y are connected to a computer 12 which is connected to a number of acquirer computers 13 and 14 in the respective countries which are connected to respective point of sale machines 15, 16 which can be vending machines, ATM or other machine capable of receiving card apparatuses 17, 17'. The values prepaid by the respective cardholders (or load values) are maintained in a so called float account of a certain currency by the respective issuer computers 10 and 11. Clearance will take place according to the so called net settlement system known per se and referenced above. This information will be made available to the computer 12 for exchanging data value on request from the issuer companies 10 and 11.

When a load is requested by a card 17, 17' or by the card holder, this information is passed on from the POS machines 15 or 16 to a respective acquirer computer 13 or 14 also connected to the computer 12. As such loading requests are executed on-line, e.g. after consulting with an issuer computer is authorized.

The above embodiments of the present invention are for illustrative purposes only and are not to be construed as limitations to the following claims, which primarily define the requested rights. For example in future it will also be possible to load value on a card by inserting coins in a machine which is capable of receiving the financial card and executing the necessary security checks as well as taking up coins and establishing the value thereof.

## Claims

1. A card apparatus for executing financial transactions, comprising:
- processor means for executing authorization routines and certain financial transactions, at least including prepaid transactions off-line, and loading transactions on line directly or indirectly with an issuer computer of an issuer company which issues said card apparatus; and
- memory means for storing data into said card apparatus, at least including a first purse memory part for storing a purse value of a certain amount as agreed upon between the issuer company and the cardholder of said card apparatus, or as permitted by the issuer company, and a second verification memory part for storing encoded information for cardholder verification for approving and request to load value onto such card when the user has entered his/her personal identification information.

2. A card apparatus according to claim 1, including two or more purse memory parts for storing two or more purse values for different currencies.

3. A card according to claim 2, provided with means for exchange of value between a first purse value and a second purse value.

4. A card apparatus according to claim 1, 2 or 3, provided with means for (partly) unloading a purse value.

5. A card apparatus according to anyone of claims 1-4, provided with a load trigger value of zero or above, for triggering a load sequence when such trigger value is reached.

6. A card apparatus according to anyone of claims 1-5, provided with a purchase completion guarantee limit under a zero balance for completing a purchase even if the purse value is insufficient.

7. A cashless transaction system, comprising:
- a number of card apparatus for off-line execution of financial cashless transactions;
- one or more terminal apparatuses provided with receiving means for receiving a card apparatus and with a keyboard for off-line executing financial cashless transactions;
- one or more acquirers operatively in connection with one or more terminal apparatuses for acquiring the transaction values obtained by said terminal apparatus;
- one or more clearers for clearing financial transactions, including transborder transactions and operatively in connection with said acquirer; and
- one or more issuers which issued said financial card on by which issuer a and by which issuer a float account is held, in which float account the prepaid amounts are recorded.

8. A cashless transaction system according to claim 7, provided with a card apparatus according to anyone of claims 1-6.
